Europäisches Patentamt

European Patent Office

Office européen des brevets

(19)

(11) **EP 1 048 132 B1**

(12) **EUROPÄISCHE PATENTSCHRIFT**

(45) Veröffentlichungstag und Bekanntmachung des Hinweises auf die Patenterteilung:
**26.02.2003 Patentblatt 2003/09**

(21) Anmeldenummer: **98961035.7**

(22) Anmeldetag: **22.10.1998**

(51) Int Cl.⁷: $\text{H04B } 7/26$

(86) Internationale Anmeldenummer:
**PCT/DE98/03119**

(87) Internationale Veröffentlichungsnummer:
**WO 99/021297 (29.04.1999 Gazette 1999/17)**

(54) **VERFAHREN UND FUNK-KOMMUNIKATIONSSYSTEM ZUR DATENÜBERTRAGUNG**

METHOD AND RADICOMMUNICATIONS SYSTEM FOR TRANSMITTING DATA

PROCEDE ET SYSTEME DE RADIOCOMMUNICATION POUR LA TRANSMISSION DE DONNEES

(84) Benannte Vertragsstaaten:
**DE FR GB**

(30) Priorität: **23.10.1997 DE 19746894**

(43) Veröffentlichungstag der Anmeldung:
**02.11.2000 Patentblatt 2000/44**

(73) Patentinhaber: **SIEMENS AKTIENGESELLSCHAFT**
**80333 München (DE)**

(72) Erfinder:
• **KAMMERLANDER, Karl**
**D-81543 München (DE)**

• **VON DER NEYEN, Hans**
**D-81825 München (DE)**
• **BESSON, Marcus**
**D-82008 Unterhaching (DE)**

(56) Entgegenhaltungen:
**EP-A- 0 700 225          WO-A-97/30526**

• **MAYER J ET AL: "Protocol and Signalling Aspects of Joint Detection CDMA" PROCEEDINGS OF 8TH IEEE INTERNATIONAL SYMPOSIUM ON PERSONAL, INDOOR AND MOBILE RADIO COMMUNICATIONS - PIMRC '97, Bd. 3, 1. September 1997, Seiten 867-871, XP002100519 Helsinki (FI)**

**Beschreibung**

Die Erfindung betrifft ein Verfahren und ein Funk-Kommunikationssystem zur Datenübertragung in einem GSM-Mobilfunknetz, insbesondere zwischen Basisstationen und Mobilstationen über eine TD/CDMA-Funkschnittstelle.

In Jürgen Mayer et al: Protocol and Signalling Aspects of Joint Detection CDMA, Proceedings of 8th IEEE International Symposium on Personal, Indoor and Mobile Radio Communications-PIMRC '97, Bd. 3, 1. September 1997, Seiten 867-871, Helsinki (FI) ist ein Verfahren und ein Funk-Kommunikationssystem gemäß den Oberbegriffen der Ansprüche 1 und 14 beschrieben.

In der EP 0 700 225 A ist ein Funksystem beschrieben, das eine Basisstation mit einer TDMA-Übertragungseinheit und einer drahtlosen ISDN-Übertragungseinheit aufweist. Ein TDMA-Kanal mit einer niedrigen Datenrate wird zum Aufbau einer mit einer hohen Datenrate versehenen drahtlosen ISDN-Verbindung verwendet.

In der WO 97/30526 ist ein Mobilfunksystem mit sogenannten Dual-Mode-Basisstationen beschrieben, die sowohl Zeitschlitze mit FDMA/TDMA-Kanälen, als auch Zeitschlitze mit CDMA-Kanälen unterstützen.

In Mobilfunknetzen werden Nachrichten (beispielsweise Sprache, Bildinformationen oder andere Daten) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Beim GSM (Global System for Mobile Communication) liegen die Trägerfrequenzen im Bereich von 900, 1800 bzw. 1900 MHz. Für zukünftige Mobilfunknetze mit TDMA- oder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Aus DE 195 49 148 ist ein Funk-Kommunikationssystem bekannt, das eine CDMA-Teilnehmerseparierung (CDMA Code Division Multiple Access) nutzt, wobei die Funkschnittstelle zusätzlich eine Zeitmultiplex-Teilnehmerseparierung (TDMA Time Division Multiple Access) aufweist. Es wird folglich ein TD/CDMA-Übertragungsverfahren für die Funkschnittstelle genutzt. Empfangsseitig wird ein JD-Verfahren (JD Joint Detection) angewendet, um unter Kenntnis von Spreizcodes mehrerer Teilnehmer eine verbesserte Detektion der übertragenen Daten vorzunehmen. Dabei ist es bekannt, daß einer Verbindung über die Funkschnittstelle zumindest zwei Datenkanäle zugeteilt werden können, wobei jeder Datenkanal durch einen individuellen Spreizcode unterscheidbar ist. Das hierbei gezeigte Funk-Kommunikationssystem ist ein Kandidat für ein System der 3. Mobilfunkgeneration.

Aus P. Vary, "Implementation Aspects of the Pan-European digital mobile radio System", IEEE 1989, S.4-17 bis 4-22, ist die Struktur einer GSM Funkstation mit HF-Teil, Filtern, Kanalschätzern, Modulatoren/Demodulatoren, Kanalcodierern/Kanaldecodierern bekannt. Der GSM-Standard benutzt eine Kombination von FDMA (Frequency Division Multiple Access) und TDMA für die Funkschnittstelle und hat weltweite Akzeptanz gefunden. Über 20 Mio. Teilnehmer werden allein in Europa über diesen Standard bedient. Umfangreiche Investionen in die Infrastruktur und in Mobilstationen wurden bisher getätigt.

Der Übergang von der 2. Mobilfunkgeneration (GSM) zur 3. Mobilfunkgeneration wird für die Netzbetreiber wiederum erhebliche Investitionen erfordern, wenn Netzelemente wie Mobil vermittlungsstelle, Basisstationscontroller oder Basisstationen ausgetauscht oder zusätzlich installiert werden müssen. Auch durch die Hersteller der Infrastruktur und der Mobilstationen sind bedeutende Entwicklungsaufwendungen nötig.

Der Erfindung liegt die Aufgabe zugrunde, Verfahren und Funk-Kommunikationssysteme zur Datenübertragung in einem Mobilfunknetz anzugeben, die eine aufwandsgünstige Migration von einem bestehenden GSM-Mobilfunknetz erlauben. Diese Aufgabe wird durch das Verfahren mit den Merkmalen des Patentanspruchs 1 und das Funk-Kommunikationssystem mit den Merkmalen des Patentanspruchs 13 gelöst. Vorteilhafte Weiterentwicklungen sind den Unteransprüchen zu entnehmen.

In einem Mobilfunknetz mit zumindest einem Basisstationscontroller (BSC) und mit einer einer Funkzelle zugeordneten ersten Basisstation (BS), stellt eine erste Basisstation (BS) einen ersten Frequenzkanal zur Datenübertragung und zur Übertragung von Signalinformationen und einen Organisationskanal nach dem GSM-Standard zur Verfügung, wobei die erste Basisstation (BS) zusätzlich einen zweiten Frequenzkanal zur Datenübertragung mit einem TD/CDMA-Übertragungsverfahren zur Verfügung stellt. Eine Verbindung (V1) wird im ersten oder zweiten Frequenzkanal aufgebaut. Erfindungsgemäß werden über den Organisationskanal die in der Funkzelle unterstützten Standards signalisiert, wobei durch den Basisstationscontroller (BSC) eine Übergabe der Verbindung (V1) auf den jeweils anderen Frequenzkanal erfolgt, ohne dass eine zweite Basisstation (BS) ausgewählt wird.

Dies bedeutet, daß ausgehend von einer bereits erschlossenen Basisstationsanlage durch Nachrüsten einer bereits im GSM-Netz installierten Basisstation, wobei dieses für die Trägerfrequenzen im Bereich von 900, 1800 bzw. 1900 MHz gleichermaßen gilt, ein neues Übertragungsverfahren angeboten wird. Damit entfallen zusätzliche Aufwendungen zum Erschließen einer neuen Basisstationsanlage. Durch schrittweises Nachrüsten der Basisstationen wird die Abdeckung in einer Weise verbessert, die es erlaubt, die zusätzlichen funktechnischen Kapazitäten erst dort zu schaffen, wo sie im ausreichendem Maße nachgefragt werden. Die Investitionsrisiken für Netzbetreiber werden dadurch gesenkt.

Ohne die Versorgung von GSM-Mobilstationen zu vernachlässigen kann punktuell eine Versorgung von Mobilstationen, die nach einem TD/CDMA-Übertragungsverfahren die Funkschnittstelle nutzen, gesichert werden. Für Mixed-Mode Mobilstationen, die beide Frequenzkanäle bedienen können, ist eine volle Abdeckung gewährleistet und für bestimmte Regionen können zusätzliche neue, höherrate Dienste angeboten werden.

Die Übergabe der Verbindung schließt nicht nur bereits aufgebaute Verbindungen ein, sondern ist auf Fälle anwendbar, in denen eine Mobilstation Organisations- oder Signalisierungsinformationen in einem Frequenzkanal, vorteilhafterweise dem ersten Frequenzkanal, empfängt bzw. Signalisierungsinformation sendet, die Übertragung der Nutzinformationen jedoch im anderen Frequenzband, beispielsweise dem zweiten Frequenzband stattfindet.

Die Migration von bestehenden GSM-Mobilfunknetzen zu einem Funk-Kommunikationssystem der 3. Generation wird dadurch wesentlich vereinfacht. Das TD/CDMA-Übertragungsverfahren verbindet Vorteile des bekannten TDMA-Übertragungsverfahrens mit denen der einfachen Verwirklichung von höherratigen Diensten mit variabler Datenrate mit Hilfe eines CDMA-Teilnehmerseparierungsverfahrens, wobei beide Übertragungsverfahren ein gleiches Zeitraster nutzen.

Durch das breitbandige Auslegen des zweiten Frequenzkanals können die Sende/Empfangseinrichtungen im Vergleich zu einer Vielzahl von schmalbandigen Frequenzkanälen wirtschaftlicher hergestellt werden, da weniger HF-Komponenten benötigt werden und fortschreitend bessere und billiger digitale Signalverarbeitungsmittel die empfangs- und sendeseitige Signalverarbeitung erleichtern.

Nach einer vorteilhaften Weiterbildung der Erfindung überlappen sich die Frequenzbänder des ersten und zweiten Frequenzkanals. Dies bedeutet, daß das TD/CDMA-Übertragungsverfahren in dem GSM-Mobilfunksystem vorbehaltenen Frequenzbändern zum Einsatz kommt. Durch entsprechende Frequenzplanung werden zumindest einzelnen Basisstationen mehrere zusammenhängende Frequenzbänder zugewiesen, die dann auch vom breitbandigeren zweiten Frequenzkanal genutzt werden. Besonders vorteilhaft wird dies realisiert, wenn das Frequenzband des zweiten Frequenzkanals zumindest acht Frequenzkanäle mit einer Bandbreite gleich dem ersten Frequenzkanal umfaßt. Der zweite Frequenzkanal hat beispielsweise eine Bandbreite von 1,6 oder 3,2 MHz und umfaßt somit acht oder 16 bisherige 200 kHz schmalbandige GSM-Frequenzbänder. Der zweite Frequenzkanal ist also an das Frequenz- und Zeitraster des GSM-Mobilfunknetzes angepaßt.

Eine weitere vorteilhafte Ausprägung der Erfindung sieht vor, daß der erste und zweite Frequenzkanal im gleichen Frequenzband, jedoch in unterschiedlichen Zeitschlitzen realisiert werden. Dies ist besonders in Funkzellen von Vorteil, in denen ohne zusätzliche Frequenzbänder zu benötigen, GSM-, TD/CDMA- und Mixed-Mode Mobilstationen versorgt werden sollen. Bedarfsgerecht können die Zeitschlitze auf die zwei Übertragungsverfahren verteilt werden.

Die Verteilung mehrerer Verbindungen auf die Zeitschlitze wird durch den Basisstationscontroller vorteilhafterweise derart gesteuert, daß ein Zeitschlitz von einem TDMA- bzw. TD/CDMA-Übertragungsverfahren für das jeweilige andere Übertragungsverfahren übergeben wird. Damit wird erreicht, daß die Zeitschlitze mit Verbindungen gut gefüllt sind und möglichst viele Zeitschlitze bei Bedarfsschwankungen einem starker nachgefragten Übertragungsverfahren zugeteilt werden. Auf diese Weise blockieren keine einzelnen GSM-Zeitschlitze die Benutzung eines Zeitschlitzes über die ganze Bandbreite des zweiten Frequenzkanals, der eine höhere Übertragungskapazität aufweist. Gleiches gilt für ein umgekehrtes Neuverteilen der Verbindungen.

Die Übergabe einer Verbindung zu dem jeweilig anderen Übertragungsverfahren erfolgt, sobald die Auslastung des Frequenzkanals unter einen ersten Schwellwert sinkt oder das Verhältnis von Mobilstation mit TD/CDMA-Tauglichkeit zu sonstigen Mobilstation innerhalb einer Funkumgebung einen zweiten Schwellwert erreicht. Durch die Einführung der Schwellwerte wird der bisherige Bedarf oder der zukünftige Bedarf, der sich aus den in der Funkzelle befindlichen Mobilstationen ableiten läßt, abgeschätzt und durch rechtzeitiges Verteilen der Verbindungen die funktechnischen Ressourcen bestmöglich genutzt.

Betrachtet man ein Funk-Kommunikationssystem mit mehreren Basisstationen, von denen die erste beide Frequenzkanäle unterstützt und die zweite nur das TDMA-Übertragungsverfahren des GSM-Standards unterstützt, so erfolgen vorteilhafterweise Übergaben von Verbindungen von der zweiten Basisstationen ohne TD/CDMA-Tauglichkeit bevorzugt zur ersten Basisstation. Die zweite Basisstation wird durch die zwei Frequenzkanäle über umfangreichere funktechnische Ressourcen verfügen. Die Übergaben zwischen den Basisstationen können auch nach vorgenannten Prinzipien und Schwellwerten vorgenommen werden.

Das GSM-Mobilfunknetz stellt in jeder Basisstation Organisations- und Signalisierungskanäle bereit, die flächendeckend verfügbar sind. Vorteilhafterweise wird zur Übergabe von Verbindungen oder für einen Verbindungsaufbau die Signalisierungsinformation des ersten Frequenzkanals benutzt. Damit werden auch bei nicht überlappenden Frequenzkanälen keine oder nur geringe zusätzlichen Signalisierungsaufwendungen nötig und zusätzliche Kapazitäten können besser für eine Nutzinformationsübertragung genutzt werden.

Eine weitere vorteilhafte Weiterbildung der Erfindung sieht vor, daß zur Übergabe von Verbindungen oder für einen Verbindungsaufbau eine Abfrage einer gewünschten Datenrate erfolgt, und danach der erste oder zweite Frequenzkanal ausgewählt wird. Damit kann bereits bei Verbindungsaufbau oder bei einer während der Verbindung gewünschten größeren oder kleineren Datenrate eine entsprechende Zuteilung eines Übertragungsverfahrens vorbereitet werden. Dabei ist der erste Frequenzkanal für Sprachübertragung und kleinere Datenraten und der zweite Frequenzkanal für höherratige Dienste (Internet oder Multimediadienste) besser geeignet.

Das Nachrüsten der Basisstation erfolgt durch Einsatz von zusätzlichen Sende/Empfangseinrichtungen für die TD/CDMA-Übertragung oder durch Ersatz einer GSM-Sende/Empfangseinrichtung durch eine gemeinsame Sende/Empfangseinrichtung für beide Übertragungsverfahren. Trotz des Nachrüstens können jedoch gemeinsame Baugruppen, wie zum Beispiel Antennen, HF-Komponenten, Verstärker, Synchronisations- und Taktbaugruppen, Schnittstellen zum Basisstationscontroller etc. gemeinsam benutzt werden.

Es liegt im Rahmen der Erfindung, daß der erste und zweite Frequenzkanal unterschiedlichen Zellgrößen gemäß einem hierarchischen Zellmodell zugeordnet sind. Während einer Migrationsphase kann es vorteilhaft sein, den zweiten Frequenzkanal für die TD/CDMA-Übertragung nur in bestimmten eng begrenzten Räumen anzubieten ("hot spots"), d.h. Mikrozellen damit auszustatten, oder für Funkzellen mit allgemein niedrigen Dichten an neuen Mixed-Mode Mobilstationen Makrozellen auszustatten.

Das erfindungsgemäße Verfahren läßt weiterhin freien Gestaltungsspielraum im Verhältnis von Aufwärts- und Abwärtsrichtung. Im Sinne einer asymmetrischen Informationsübertragung, wie sie für Multimediadienste benötigt werden, können in beide Übertragungsrichtungen unterschiedliche Datenraten benutzt werden. Alternativ können in Aufwärts- und Abwärtsrichtungen gleiche Frequenzbänder, jedoch unterschiedliche Zeitschlitze benutzt werden. Damit kann auch die Nutzung von DECT-Funk-Kommunikationssystemen eingeschlossen werden.

Der zweite Frequenzkanal kann alternativ zu TD/CDMA-Verfahren, wie es aus DE 195 49 148 bekannt sind, andere Verfahren nutzen, die auf der gleichen Zeitrahmenstruktur wie das GSM-Mobilfunknetz beruhen, jedoch eine Spreizung gemäß einer Frequenzsprungsequenz oder eine breitbandige Übertraung gemäß einer OFDM-Übertragung nach EP 97105149 nutzen.

Ausführungsbeispiele der Erfindung werden anhand der beiliegenden Zeichnungen näher erläutert.

Dabei zeigen

FIG 1      ein Blockschaltbild eines Funk-Kommunikationssystems,

FIG 2      ein Konvergenzprinzip für verschiedene Übertragungsdienste in einem Funk-Kommunikationssystem,

FIG 3, 4      eine Darstellung der Frequenzbänder für getrennte oder sich überlappende Frequenzkanäle,

FIG 5 bis FIG 8      verschiedene Kombinationen von Mobilstationen und Basisstationen und ihre Fähigkeit TDMA und TD/CDMA Übertragungsverfahren zu unterstützen,

FIG 9      eine schematische Darstellung der Signalisierung zum Verbindungsaufbau,

FIG 10      eine schematische Darstellung der Zeitrahmenstruktur,

FIG 11      ein Blockschaltbild der Signalverarbeitungsmittel,

FIG 12      ein Blockschaltbild vom HF-Teil des Senders,

FIG 13      ein Blockschaltbild vom HF-Teil des Empfängers,

FIG 14      ein detailliertes Blockschaltbild vom Sender für die TD/CDMA-Übertragung, und

FIG 15      ein detailliertes Blockschaltbild vom Empfänger für die TD/CDMA-Übertragung.

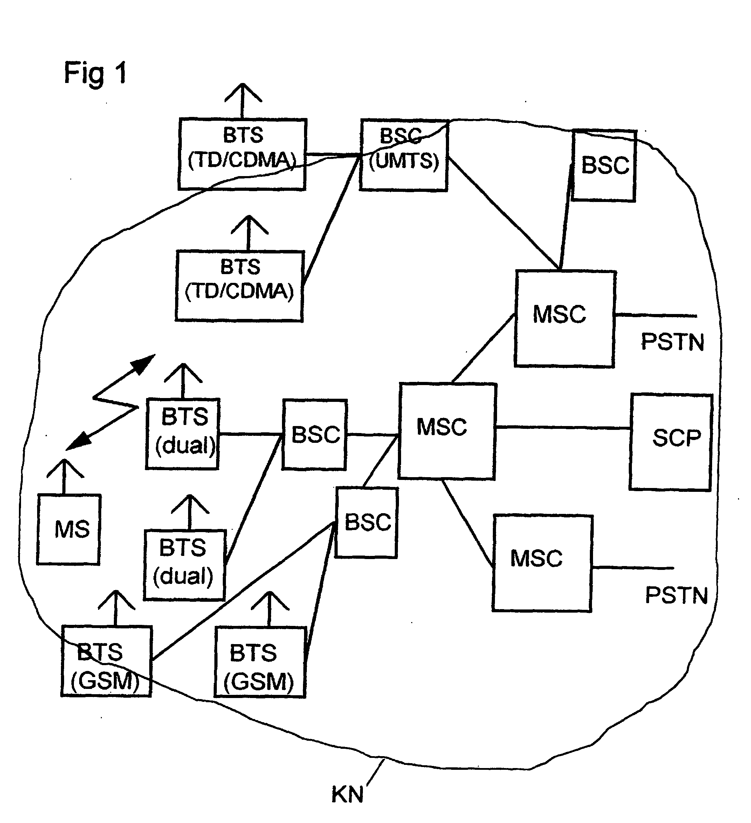

Das in FIG 1 dargestellte Funk-Kommunikationssystem KN entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BTS. Eine solche Basisstation BTS ist eine Funkstation, die über eine Funkschnittstelle eine Funkverbindung zu Mobilstationen MS aufbauen kann. Eine Dienstesteuerungseinheit SCP im Sinne eines intelligenten Netzes (IN) realisiert Funktionen zum Software-Update für das Mobilfunknetz bzw. für Teile davon.

Bei der Aufteilung des Mobilfunknetzes kann in Einrichtungen BTS, BSC unterschieden werden, die Dienste nach dem GSM-Standard, Dienste nach einem Standard der 3. Generation (UMTS) mit TD/CDMA-Funkschnittstelle oder die beide Standards unterstützen. Die Funkzellen der entsprechenden Basisstationen BTS(dual), BTS(GSM), BTS(TD/CDMA) können sich dabei auch überlagern.

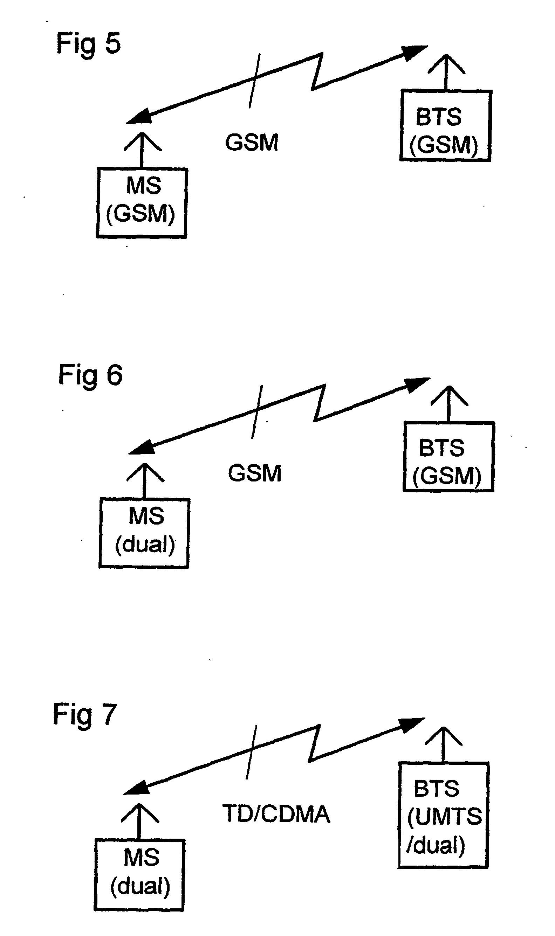

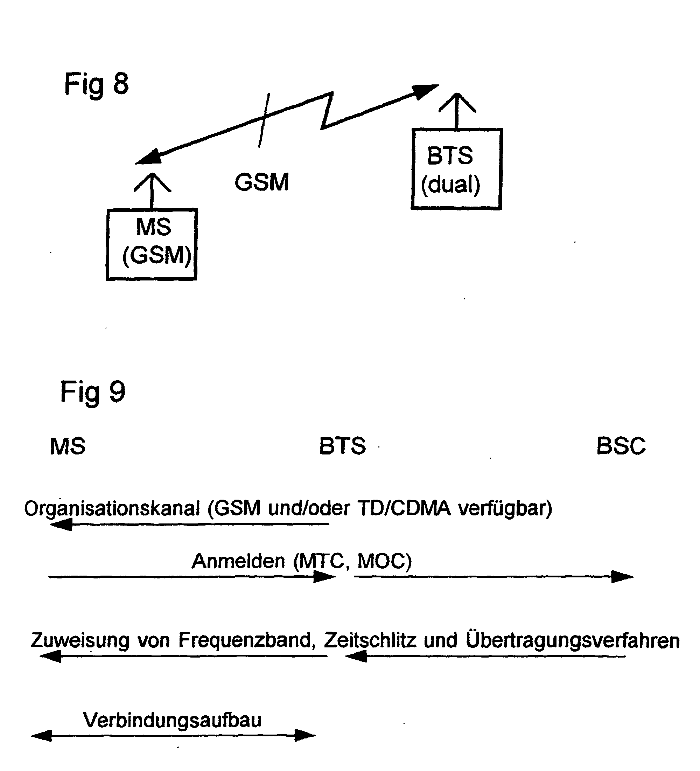

Die Mobilität der Mobilstationen MS soll entsprechend der Erfindung nicht durch die unterschiedlichen verfügbaren Standards behindert werden. Eine Mobilstation MS, die nur den GSM-Standard unterstützt, kann weiterhin eine Funkverbindung zu einer Basisstation BTS des GSM-Standards aufbauen (Fig. 5). Die Mobilstation MS kann jedoch ebenso von einer Basisstation BTS versorgt werden, die dual beide Standards (TD/CDMA, GSM) unterstützt (Fig. 8). Eine Basisstation BTS, die TD/CDMA und TDMA Übertragung nach GSM unterstützt, ist eine Basisstation nach der Erfindung.

Eine Mixed-Mode Mobilstation MS, die beide Standards unterstützt (Fig. 6 und 7), kann sowohl mit einer GSM-Basisstation BTS(GSM), als auch mit einer Basisstation BTS kommunizieren, die nur eine TD/CDMA-Übertragung oder beide Übertragungsverfahren zuläßt.

Eine Mobilstation MS oder eine Basisstation BTS, die TD/CDMA und GSM-Übertragung unterstützen, müssen nicht ständig alle dafür notwendigen Programmodule gespeichert haben. Ein Laden von Programmodulen ersetzt oder ergänzt die vorhandenen Programmodule im Sinne eines Software-Updates oder einer Parametereinstellung und erfolgt mit netzseitiger Unterstützung durch die Dienstesteuerungseinheit SCP.

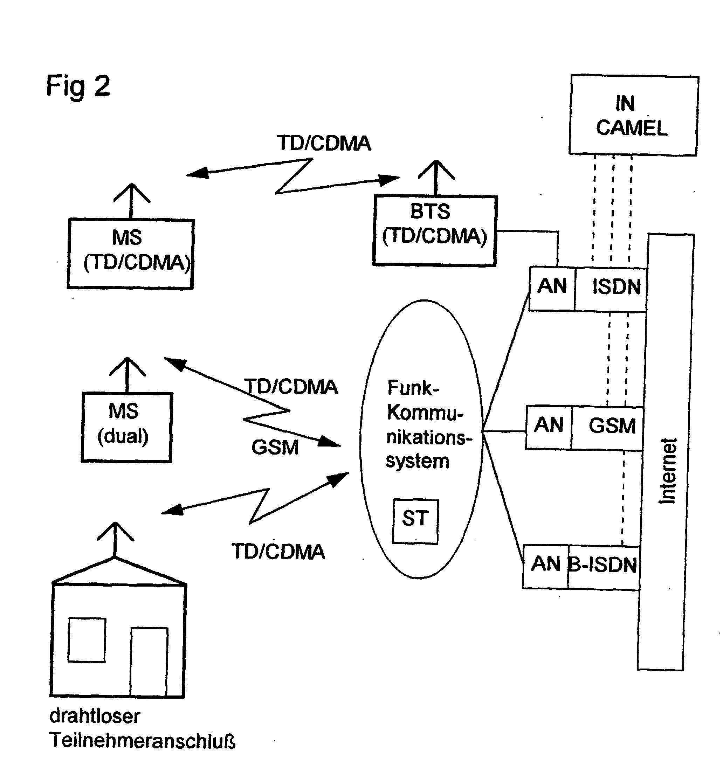

Mit Unterstützung intelligenter Netze IN (insbesondere das CAMEL-Protokoll des GSM-Mobilfunknetzes) ist ein Zusammenfassen bisher getrennter Funktionen von Kommunikationsnetzen nach FIG 2 möglich. Mittels einer TD/CDMA-Übertragung kann neben einer Anbindung mobiler Funkstationen (Mobilstation MS) auch ein drahtloser Anschluß fester Funkstationen (wireless in the local loop) erfolgen. Weiterhin kann auch im Indoor-Bereich ein Anschluß von Basisstationen BTS (TD/CDMA) über eine ISDN-Leitung erfolgen, so daß im Sinne schnurloser Teilnehmerendgeräte eine Heimbasisstation zur Verfügung steht. Ein Funk-Kommunkationssystem entsprechend der Erfindung kann über konfigurierbare UMTS Zugriffsknoten AN über ISDN, GSM-(PCM) oder B-ISDN-Leitungen mit Internet- oder anderen Übertragungsnetzen verbunden werden.

Die genutzten Dienste und die zur Übertragung genutzten Kommunikationsnetze werden somit trennbar, so daß unterschiedliche Dienste auch von unterschiedlichen Kommunikationsnetze bereitgestellt werden können. Eine Vielzahl von Anwendungsservern kann unabhängig vom Kommunikationsnetz genutzt werden, wobei unterschiedliche Kommunikationsnetze beispielsweise mit ATM-Übertragungsstrecken verbunden sind.

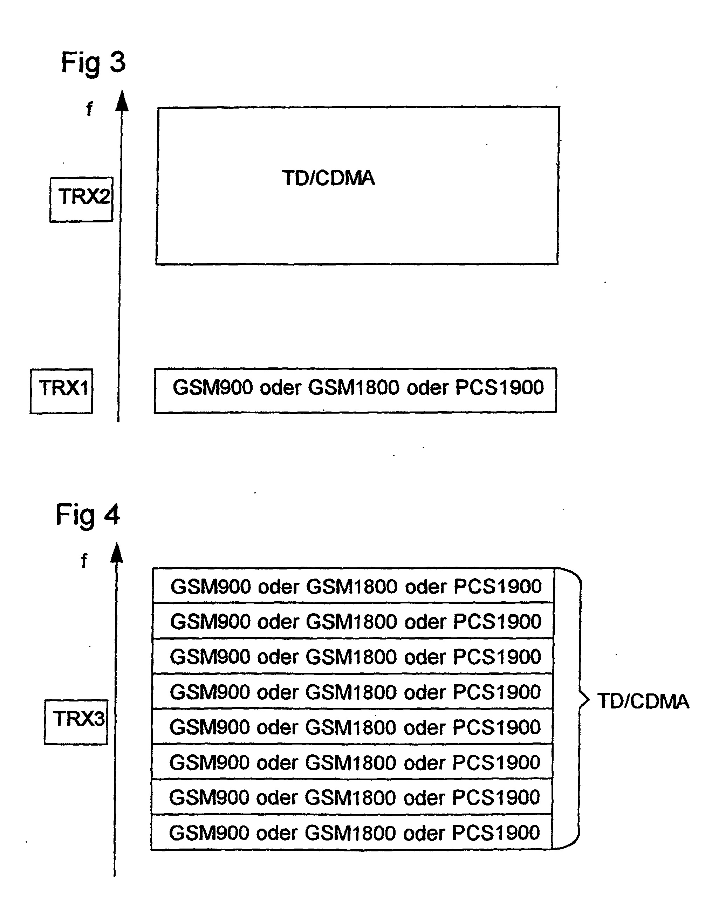

Wird die Funkschnittstelle zwischen einer ersten Basisstation BTS und weiteren Funkstationen MS (TD/CDMA), MS(dual) betrachtet, dann sind Frequenzbänder nach FIG 3 und 4 auf die beiden Übertragungsverfahren aufteilbar. In FIG 3 umfaßt ein GSM900, GSM1800 oder PCS1900 Frequenzband einen ersten Frequenzkanal mit 200 kHz Bandbreite. Dieser erste Frequenzkanal wird durch eine erste Sende/Empfangseinrichtung TRX1 realisiert. Ein zweites Frequenzband für eine UMTS-Übertragungsverfahren bei ca. 2000 MHz ist getrennt und umfaßt einen zweiten Frequenzkanal für eine TD/CDMA-Übertragung. Dieser zweite Frequenzkanal wird durch eine zweite Sende/Empfangseinrichtung TRX2 realisiert.

Mixed-Mode Mobilstationen MS sind dabei in der Lage, beide Frequenzkanäle auszuwerten. Insbesondere werden nur im ersten Frequenzkanal von der Basisstation BS gesendeten Organisations- und Signalisierungsinformationen auch für den Verbindungsaufbau, für eine Übergabe und für Nachbarzellenmessungen empfangen und ausgewertet.

In FIG 4 überlappen sich die Frequenzbänder des ersten und zweiten Frequenzkanals, d.h. acht erste schmalbandige 200 kHz Frequenzkanäle bilden einen breitbandigen 1,6 MHz Frequenzkanal für die TD/CDMA-Übertragung, der durch eine dritte Sende/Empfangseinrichtung TRX3 realisiert wird. Das TD/CDMA-Übertragungsverfahren wird also in einem GSM-Frequenzband verwirklicht.

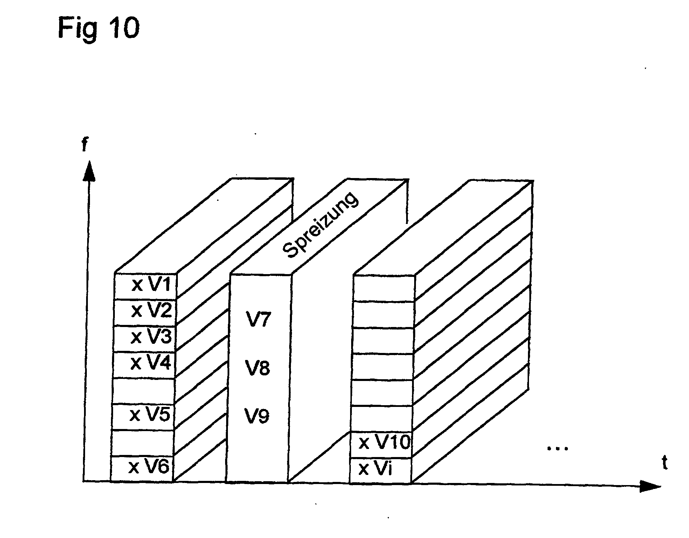

In FIG 10 wird verdeutlicht, daß die Unterscheidung der beiden Übertragungsverfahren anhand von Zeitschlitzen innerhalb der beiden Übertragungsverfahren gemeinsamen TDMA-Rahmenstruktur erfolgt. Es sind beispielhaft drei Zeitschlitze gezeigt, wobei der erste Zeitschlitz acht GSM-Kanäle enthält, von denen 6 mit Verbindungen V1 bis V6 belegt sind. Im zweiten Zeitschlitz kommt gemäß dem TD/CDMA-Verfahren eine Spreizung mit individuellen Spreizcodes hinzu, so daß drei Verbindungen V7 bis V9 übertragen werden. Den Verbindungen V7 bis V9 können dabei durch Zuweisungen mehrerer Spreizkodes entsprechend höhere Datenrate ermöglicht werden. Im dritten Zeitschlitz sind nur zwei GSM-Kanäle durch Verbindungen V10 und Vi belegt.

Die Funkschnittstelle des TD/CDMA-Verfahren kann folgendermaßen festgelegt werden:

- acht Zeitschlitze pro Rahmen,
- 64 Fullrate-Sprachkanäle pro Rahmen,
- 8 Spreizcodes pro Zeitschlitz,
- Bandbreite 1,6 MHz (alternativ 3,2 MHz),
- Funkblocklänge 577 µs,
- QPSK oder 16 QAM-Modulation von zu übertragenden Daten,
- linearisierte GMSK gespreizte Modulation,
- Chiprate 2,167 Mchips/s,
- Schaltungs- oder packetvermittelte Datenraten von 1 Mbit/s und 2 Mbit/s für Indoor-Umgebungen.

Für den in FIG 10 gezeigten Fall nimmt die Steuereinrichtung ST nach FIG 2, die üblicherweise in einem Basisstationscontroller BSC realisiert wird, eine Übergabe der Verbindungen V10 und Vi vom dritten auf den ersten Zeitschlitz vor, so daß der dritte Zeitschlitz wahlweise auch für eine TD/CDMA-Übertragung genutzt werden kann.

Diese Verteilung wird dadurch eingeleitet, daß die Belegung des dritten Zeitschlitzen unter einen ersten Schwellwert von 3 gesunken ist und ausreichend erste Frequenzkanäle in anderen GSM-Zeitschlitzen zur Verfügung standen. Diese Verteilung kann auch dadurch ausgelöst werden, daß eine Verbindungen V1 zu einer Mixed-Mode Mobilstation MS führt, die eine höhere Datenrate oder einen neuen Dienst anfordert, so daß ein Wechsel der Verbindung V1 zu einer hochratigen TD/CDMA-Übertragung nötig wird. Dabei findet eine Übergabe innerhalb einer Basisstation BS vom ersten zum zweiten Frequenzkanal statt.

Schon beim Verbindungsaufbau werden Mixed-Mode Mobilstationen MS bevorzugt an Basisstationen BS übergeben, die auf dem zweiten Frequenzkanal freie Übertragungskapazität anbieten können. Dies geschieht, selbst wenn ein Verbindungsaufbau auch zu anderen Basisstationen BS möglich wäre. Eine Übergabe findet ebenfalls statt, wenn sich mehrere Mixed-Mode Mobilstationen MS in einer Funkzelle anmelden, die eventuell einen höherratigen Dienst nachfragen werden. Ist beispielsweise das Verhältnis der Verbindungen V1, V2, V3 (Mixed-Mode) zu den Verbindungen V4, V5, V6 gleich 1 und erreicht damit einen zweiten Schwellwert, dann wird ebenfalls ein zweiter Zeitschlitz für die TD/CDMA-Übertragung vorbereitet.

Ein Meldungsaustausch zwischen einer Mobilstation MS und dem Funk-Kommunikationssystem beginnt mit einer netzseitigen Information über einen Organisationskanal (Figur 9). Diese Informationen signalisieren der Mobilstation MS, welche Standards in der entsprechenden Funkzelle unterstützt werden und welche Frequenzkanäle zur Verfügung stehen. Hierbei wird ein Organisationskanal aus dem GSM-Mobilfunknetz genutzt.

Gibt der Teilnehmer der Mobilstation MS einen Gesprächswunsch (MOC) an oder wird ein Verbindungsaufbau zur Mobilstation MS (MTC) gewünscht, so wird der Verbindungsaufbau angemeldet und der gewünschte Dienst signalisiert, worauf der Basisstationscontroller BSC eine Zuweisung von Frequenzband, Zeitschlitz und Übertragungsverfahren vornimmt und über die Basisstation BS der Mobilstation MS signalisiert. Daraufhin wird die Verbindung Vi im signalisierten Frequenzkanal betrieben.

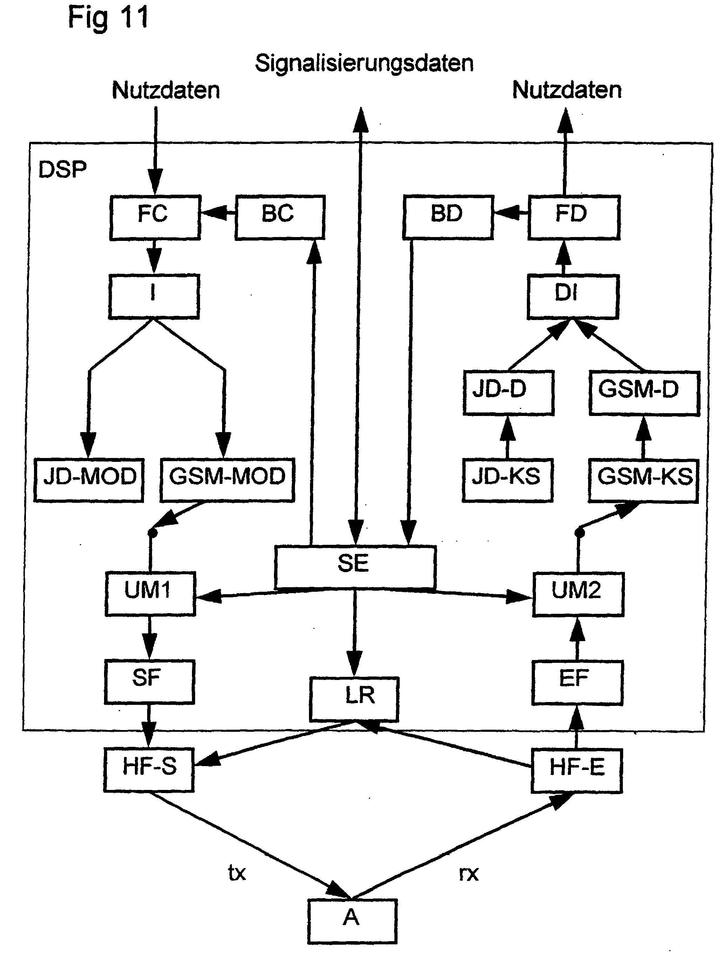

Der Aufbau einer Sende/Empfangseinrichtung TRX3 mit beiden Übertragungsverfahren innerhalb einer Basisstation ist vereinfacht in Fig. 11 gezeigt, wobei eine Aufteilung in ein Digitalteil, das durch digitale Signalverarbeitungsmittel DSP realisiert wird, und ein HF-Teil, das aus einem Sendeteil HF-S und einem Empfangsteil HF-E besteht, vorgenommen ist. Das Sendeteil HF-S und das Empfangsteil HF-E sind mit einer gemeinsamen Antenneneinrichtung A verbunden. Gemeinsame Komponenten für mehrere Sende/Empfangseinrichtungen TRX1, TRX2, TRX3, wie z.B. Verstärker, Synchronisations- und Taktbaugruppen, Schnittstellen zum Basisstationscontroller und zum Organisations- und Wartungszentrum OMC sind nicht dargestellt.

Der Sendepfad der digitalen Signalverarbeitung besteht aus einem Faltungscodierer FC zur Kanalcodierung von Nutzdaten und Signalisierungsdaten, die zuvor in einem Blockcodierer BC blockcodiert wurden. Anschließend werden in einem Interleaver I die Daten verwürfelt und je nach Übertragungsstandard einem Modulator GSM-MOD zur GSM-Modulierung oder einem Modulator JD-MOD zur TD/CDMA-Modulierung zugeführt. Ein erstes Umschaltmittel UM1, das wie auch ein später gezeigtes zweites Umschaltmittel UM2 durch ein Steuermittel SE gesteuert wird, verbindet den ausgewählten Modulator GSM-MOD bzw. JD-MOD mit einem digitalen Sendefilter SF und weiter mit dem Sendeteil HF-S. Ein Mittel LR zur Sendeleistungsregelung steuert nach Vorgaben der Steuermittel SE die Sendeleistung für Sendesignale tx.

Im Empfangspfad werden durch die Antenneneinrichtung A empfangene Empfangssignale rx im Empfangsteil HF-E aufgearbeitet und der digitalen Signalverarbeitung zugeführt. Ein digitales Empfangsfilter EF filtert die breitbandigen Empfangssignale rx und gibt über das zweite Umschaltmittel UM2 die Signale an einen Kanalschätzer ab, der entweder ein Kanalschätzer GSM-KS nach dem GSM-Standard oder ein Kanalschätzer JD-KS nach dem TD/CDMA-Standard ist. Nach der Kanalschätzung werden die Signale dem jeweiligen Datenschätzer GSM-D oder JD-D zugeführt, die die Datendetektion vornehmen. In einem Deinterleaver DI werden die Daten beider Pfade wieder gemeinsam entwürfelt und anschließend einem Faltungsdecodierer FD zur Kanaldecodierung zugeführt. Signalisierungsinformationen werden einem Blockdecodierer BD zugeführt, der diese Daten decodiert an das Steuermittel SE abgibt.

Das Steuermittel SE gibt die zu sendenden oder die empfangenen Signalisierungsdaten in den Sende- bzw. Empfangspfad weiter und stellt die Verbindung zu netzseitigen Signalisierungskanälen zum Basisstationscontroller BSC her.

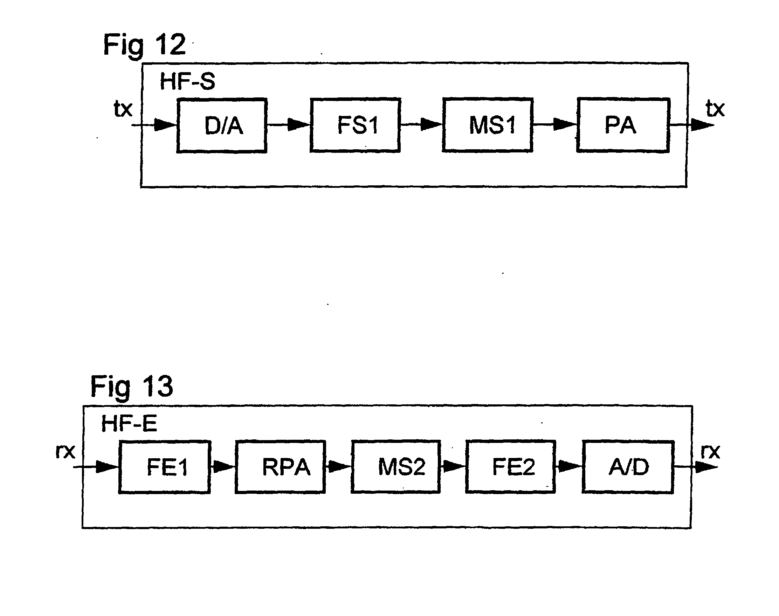

Das Sendeteil HF-S nach Fig. 12 enthält einen Digital/Analog-Wandler D/A für Real- und Imaginärteil, erste analoge Sendefilter FS1 zum Tiefpaßfiltern der Signale im Basisband, eine erste Mischstufe MS1 zum Umsetzen der Sendesignale tx ins Sendefrequenzband, und einen Leistungsverstärker PA zum Verstärken der Sendesignale tx.

Das Empfangsteil HF-E nach Fig. 13 enthält einen ersten analogen Empfangsfilter EF1, einen Empfangsverstärker RPA zum Messen und Verstärken der Empfangssignale rx, eine zweite Mischstufe MS2 zum Umsetzen der Empfangssignale rx ins Basisband (es können auch mehrere Mischstufen genutzt werden), zweite analoge Empfangsfilter EF2 und schließlich einen Analog/Digital-Wandler A/D für Real- und Imaginärteil, der digitale Empfangssignale rx erzeugt, die in dem digitalen Signalverarbeitungsmittel DSP verarbeitbar sind.

Empfangteil HF-E und Sendeteil HF-S sind breitbandig, beispielsweise für B=1,6 MHz ausgelegt. Im folgenden wird nur der TD/CDMA-Modus näher erläutert.

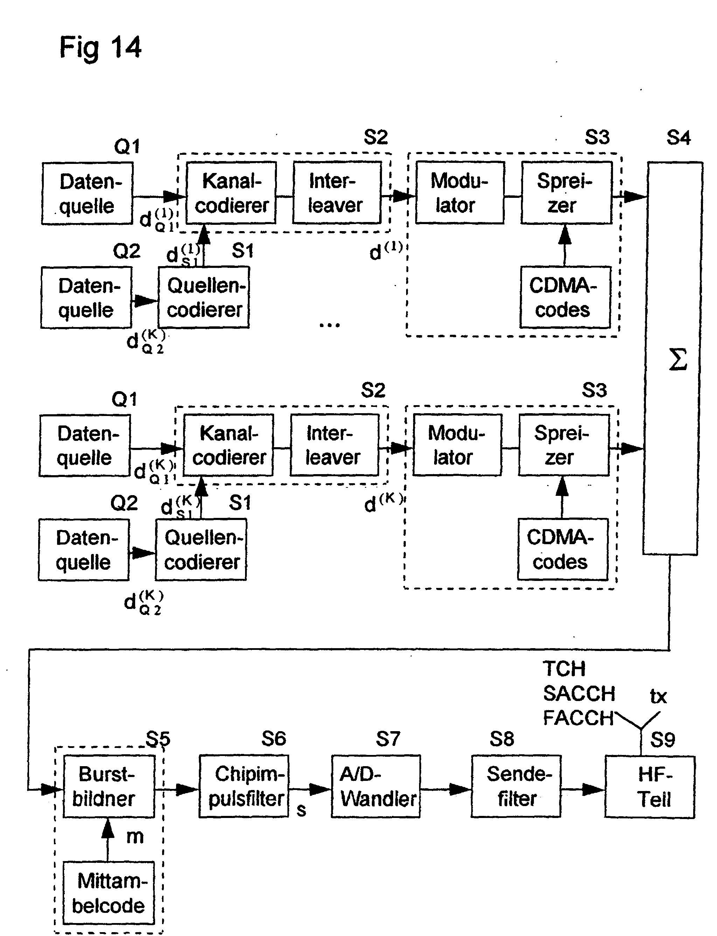

In Fig. 14 ist der Sendepfad der Einrichtung detailliert dargestellt. Er ist in der üblichen Beschreibungsform zur Modellierung und Simulation eines nachrichtentechnischen Systems dargestellt, bei dem die Abhängigkeit zwischen verschiedenen Funktionen und die Systemstruktur dargestellt ist.

Im Teilmodul S2 werden die Eingangsdaten $d_{S1}^{(k)}$, k=1..K, die wahlweise aus den uncodierten Daten $d_{Q1}^{(k)}$, k=1..K, oder aus den im Teilmodul S1 quellencodierten Daten $d_{Q2}^{(k)}$, k=1..K, hervorgehen, der Kanalcodierung mit anschließenden Interleaving unterzogen. Die Daten von einer ersten Datenquelle Q1 werden über einen Nutzdatenkanal TCH übertragen, die Daten von einer zweiten Datenquelle Q2 über einen Signalisierungskanal SACCH bzw. FACCH.

Eine n-PSK Modulation und eine Spreizung der Daten mit den modulierten teilnehmerspezifischen CDMA-Codes $c^{(k)}$, k=1..K, erfolgt im Teilmodul S3. Danach folgt die Summation aller gespreizten Datenfolgen im Teilmodul S4 und ein anschliessendes Integrieren der Mittambel in die Burststruktur im Teilmodul S5. Im Teilmodul S6 folgt die spektrale Formung des Sendesignals s; in den Modulen S7 bis S9 die Umsetzung des zeitdiskreten 4-fach überabgetasteten Sendesignals im Basisband $s_{S6}$ in den zeit- und wertekontinuierlichen Bandpaßbereich des Sendefrequenzbandes.

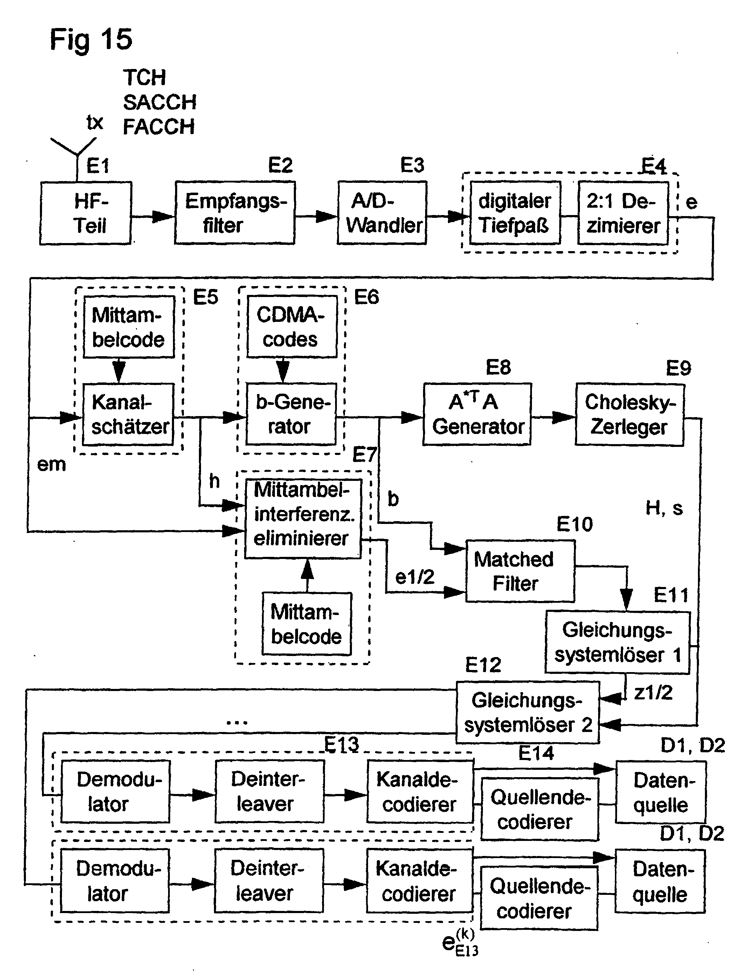

In Fig. 15 ist der Empfangspfad der Einrichtung detailliert dargestellt. Im Teilmodul E1 erfolgt die Umsetzung der Empfangssignale rx aus dem Sendefrequenzband in den Tiefpaßbereich und die Aufspaltung in eine reale und eine imaginäre Komponente. Im Teilmodul E2 erfolgt eine analoge Tiefpaßfilterung und im Teilmodul E3 schließlich eine 2-fache Überabtastung des Empfangssignals mit 13/3 MHz und einer Wortbreite von 12 bit.

Im Teilmodul E4 erfolgt eine digitale Tiefpaßfilterung mit einem Filter der Bandbreite 13/6 MHz mit möglichst hoher Flankensteilheit zur Kanaltrennung. Anschließend erfolgt im Teilmodul E4 eine 2:1 Dezimierung des 2-fach überabgetasteten Signals.

Das derart gewonnene Empfangssignal e besteht im wesentliche aus zwei Teilen, nämlich aus einem Anteil em zur Kanalschätzung und aus den Anteilen e1 und e2 zur Datenschätzung. Im Teilmodul E5 erfolgt die Schätzung aller Kanalimpulsantworten $h^{(k)}$ mittels eines bekannten Mittambelgrundcodes m aller im jeweiligen Zeitschlitz übertragener Datenkanäle.

Im Teilmodul E6 werden Parameter $b^{(k)}$ für angepaßte Filter für jeden Datenkanal unter Verwendung der CDMA-Codes $c^{(k)}$ bestimmt. Im Teilmodul E7 erfolgt die Eliminierung der von den Mittambeln $m^{(k)}$ herrührenden Interferenzen in den zur Datenschätzung benutzten Empfangsblöcken e1/2. Dies ist durch die Kenntnis von $h^{(k)}$ und $m^{(k)}$ möglich.

Im Teilmodul E8 erfolgt die Berechnung der Kreuzkorrelationsmatrix $A^{*T}$ A. Da $A^{*T}$ A Töplitzstruktur hat, ist hier nur die Berechnung eines kleines Teils der Matrix nötig, der dann zur Erweiterung auf die komplette Größe verwendet werden kann. Im Teilmodul E9 erfolgt eine Cholesky-Zerlegung von $A^{*T}$ A in $H^{*T}$ H, wobei H eine obere Dreiecksmatrix ist. Aufgrund der Töplitzstruktur von $A^{*T}$ A hat auch H näherungsweise eine Töplitzstuktur und muß nicht vollständig berechnet werden. Ein Vektor s repräsentiert die Kehrwerte der Diagonalelemente von H, die vorteilhaft bei den Gleichungssystemlösern benutzt werden können.

Im Teilmodul E10 erfolgt eine angepaßte Filterung (matched filter) der Empfangssymbolfolgen e1/2 mit $b^{(k)}$. Teilmodul E11 realisiert die Gleichungssystemlöser 1 für $H^{*T}*z1/2=e1/2$, und Teilmodul E12 die Gleichungssystemlöser 2 für $H*d1/2=z1/2$. Im Teilmodul E13 werden die geschätzten Daten d1/2 demoduliert, entwürfelt und schließlich mittels Viterbi-Decodierer faltungsdecodiert. Die decodierten Datenblöcke $d_{E13}^{(k)}$ werden wahlweise einer ersten Datensenke D1 oder über den Quellendecodierer E14 einer zweiten Datensenke D2 zugeführt. Die Quellendecodierung ist bei Datenblöcken notwendig, die über Signalisierungskanäle SACCH oder FACCH übertragen wurden.

Das in den Ausführungsbeispielen vorgestellte Funk-Kommunikationssystem zur Datenübertragung schafft ein Mobilfunknetz mit einer Kombination von FDMA, TDMA und CDMA und ist für Anforderungen an Systeme der 3. Generation geeignet. Insbesondere eignet es sich für eine Implementierung in bestehende GSM-Mobilfunknetze, für die ein nur geringer Änderungsaufwand nötig ist.

**Patentansprüche**

1. Verfahren zur Datenübertragung in einem Mobilfunknetz mit zumindest einem Basisstationscontroller (BSC) und mit einer einer Funkzelle zugeordneten ersten Basisstation (BS), bei dem

 - die erste Basisstation (BS) einen ersten Frequenzkanal zur Datenübertragung und zur Übertragung von Signalisierungsinformationen und einen Organisationskanal nach dem GSM-Standard zur Verfügung stellt,
 - die erste Basisstation (BS) zusätzlich einen zweiten Frequenzkanal zur Datenübertragung mit einem TD/CDMA-Übertragungsverfahren zur Verfügung stellt,
 - eine Verbindung (V1) im ersten oder zweiten Frequenzkanal aufgebaut wird,

 **dadurch gekennzeichnet,**
 **dass** über den Organisationskanal die in der Funkzelle unterstützten Standards signalisiert werden und dass durch den Basisstationscontroller (BSC) eine Übergabe der Verbindung (V1) auf den jeweils anderen Frequenzkanal erfolgt, ohne dass eine zweite Basisstation (BS) ausgewählt wird.

2. Verfahren nach einem der vorstehenden Ansprüche, bei dem
sich die Frequenzbänder des ersten und zweiten Frequenzkanals überlappen.

3. Verfahren nach einem der vorherigen Ansprüche, bei dem
der erste und zweite Frequenzkanal im gleichen Frequenzband, jedoch in unterschiedlichen Zeitschlitzen realisiert werden.

4. Verfahren nach Anspruch 3, bei dem
der Basisstationscontroller (BSC) eine Verteilung mehrerer Verbindungen (Vi) auf die Zeitschlitze derartig steuert, daß ein Zeitschlitz von einem TDMA-bzw. TD/CDMA-Übertragungsverfahren für das jeweilige andere Übertragungsverfahren übergeben wird.

5. Verfahren nach Anspruch 3, bei dem
der Basisstationscontroller (BSC) eine Verteilung mehrerer Verbindungen (Vi) auf die Zeitschlitze derartig steuert, daß die Übergabe einer Verbindung (V1) zu dem jeweilig anderen Übertragungsverfahren erfolgt, sobald die Auslastung eines Zeitschlitzes unter einen ersten Schwellwert sinkt.

6. Verfahren nach Anspruch 3, bei dem
der Basisstationscontroller (BSC) eine Verteilung mehrerer Verbindungen (Vi) auf die Zeitschlitze derartig steuert, daß die Übergabe einer Verbindung (Vs) zu dem jeweilig anderen Übertragungsverfahren erfolgt, sobald das Verhältnis von Mobilstation (MS) mit TD/CDMA-Tauglichkeit zu sonstigen Mobilstationen (MS) innerhalb einer Funkumgebung einen zweiten Schwellwert erreicht.

7. Verfahren nach einem der vorherigen Ansprüche, bei dem
auch Übergaben von Verbindungen (Vi) von einer zweiten Basisstationen (BS) ohne TD/CDMA-Tauglichkeit bevorzugt zur ersten Basisstation (BS) erfolgen.

8. Verfahren nach einem der vorherigen Ansprüche, bei dem
zur Übergabe von Verbindungen (Vi) oder für einen Verbindungsaufbau die Signalisierungsinformation des ersten Frequenzkanals benutzt wird.

9. Verfahren nach einem der vorherigen Ansprüche, bei dem
zur Übergabe von Verbindung (V1) oder für einen Verbindungsaufbau eine Abfrage einer gewünschten Datenrate erfolgt, und danach der erste oder zweite Frequenzkanal ausgewählt wird.

10. Verfahren nach einem der vorherigen Ansprüche, bei dem
während einer Verbindung (V1) bei zusätzlich benutzten Diensten eine Übergabe der Verbindung (V1) auf den zweiten Frequenzkanal erfolgt.

11. Verfahren nach einem der vorhergehenden Ansprüche, bei dem
der erste und der zweite Frequenzkanal durch unterschiedliche Sende-/Empfangseinrichtungen (TRX1, TRX2) der ersten Basisstation (BS) realisiert werden, jedoch weitere Baugruppen (A, HF-S, HF-E) gemeinsam benutzt werden.

12. Verfahren nach einem der vorherigen Ansprüche 1 bis 10, bei dem
der erste und zweite Frequenzkanal in einer gemeinsamen Sende/Empfangseinrichtungen (TRX3) der ersten Basisstation (BS) realisiert werden.

13. Funk-Kommunikationssystem mit zumindest einem Basisstationscontroller (BSC) und mit einer einer Funkzelle zugeordneten Basisstation (BS), die zur Datenübertragung und zur Übertragung von Signalisierungsinformationen in einem ersten Frequenzkanal und mit einem Organisationskanal nach dem GSM-Standard ausgebildet ist,

- dessen Basisstationen (BS) zumindest eine Sende/Empfangseinrichtung (TRX2, TRX3) für einen zweiten Frequenzkanal mit einem TD/CDMA-Übertragungsverfahren enthält,
- dessen Basisstationscontroller (BSC) einen Verbindungsaufbau (V1) im ersten oder zweiten Frequenzkanal steuert,

   **dadurch gekennzeichnet,**

- **daß** die Basisstation derart ausgeprägt ist, daß sie über den Organisationskanal die in der Funkzelle unterstützten Standards signalisiert,
- **daß** durch den Basisstationscontroller (BSC) eine Übergabe der Verbindung (V1) auf den jeweils anderen Frequenzkanal erfolgt, ohne dass eine zweite Basisstation (BS) ausgewählt wird.

**Claims**

1. Method for transmitting data in a mobile radio network comprising at least one base station controller (BSC) and with a first base station (BS) allocated to a radio cell, in which

- the first base station (BS) provides a first frequency channel for transmitting data and for transmitting signalling information and a control channel according to the GSM standard,
- the first base station (BS) additionally provides a second frequency channel for transmitting data by means of a TD/CDMA transmission method,
- a connection (V1) is set up in the first or second frequency channel, **characterized in that** the standards supported in the radio cell are signalled via the control channel and **in that** a handover of the connection (V1) to the other frequency channel in each case is effected by the base station controller (BSC) without a second base station (BS) being selected.

2. Method according to one of the preceding claims, in which the frequency bands of the first and second frequency channel overlap.

3. Method according to one of the preceding claims, in which the first and second frequency channel are implemented in the same frequency band but in different time slots.

4. Method according to Claim 3, in which the base station controller (BSC) controls a distribution of a number of connections (Vi) to the time slots in such a manner that a time slot is handed over from a TDMA or TD/CDMA transmission method for the other transmission method in each case.

5. Method according to Claim 3, in which the base station controller (BSC) controls a distribution of a number of connections (Vi) to the time slots in such a manner that a connection (V1) is handed over to the other transmission method in each case as soon as the capacity utilization of a time slot drops below a first threshold value.

6. Method according to Claim 3, in which the base station controller (BSC) controls a distribution of a number of connections (Vi) to the time slots in such a manner that a connection (Vs) is handed over to the other transmission method in each case as soon as the ratio of mobile station (MS) with TD/TDMA capability to other mobile stations (MS) within a radio environment reaches a second threshold value.

7. Method according to one of the preceding claims, in which connections (Vi) from a second base station (BS) without TD/CDMA capability are also preferably handed over to the first base station (BS).

8. Method according to one of the preceding claims, in which the signalling information of the first frequency channel is used for handing over connections (Vi) or for setting up a connection.

9. Method according to one of the preceding claims, in which, for handing over a connection (V1) or for setting up a connection, a desired data rate is queried and after that the first or second frequency channel is selected.

10. Method according to one of the preceding claims, in which, during a connection (V1) with additionally used services, the connection (V1) is handed over to the second frequency channel.

11. Method according to one of the preceding claims, in which the first and the second frequency channel are implemented by different transceiver devices (TRX1, TRX2) of the first base station (BS) but other modules (A, HF-S, HF-E) are used jointly.

12. Method according to one of the preceding Claims 1 to 10, in which the first and second frequency channels are implemented in a common transceiver device (TRX3) of the first base station (BS).

13. Radio communication system comprising at least one base station controller (BSC) and with a base station (BS) allocated to a radio cell, which is constructed for data transmission and for transmitting signalling information in a first frequency channel and with a control channel according to the GSM standard,

- the base station (BS) of which contains at least one transceiver device (TRX2, TRX3) for a second frequency channel with a TD/CDMA transmission method,
- the base station controller (BSC) of which controls a connection set-up (V1) in the first or second frequency channel, **characterized in that**
- the base station is designed in such a manner that it signals the standards supported in the radio cell via the control channel,
- **in that** the base station controller (BSC) hands over the connection (V1) to the other frequency channel in each case without a second base station (BS) being selected.

**Revendications**

1. Procédé pour la transmission de données dans un réseau de radiocommunication mobile comprenant au moins un contrôleur de poste de base (BSC) et un premier poste de base BS associé à une cellule radio, dans lequel :

- le premier poste de base (BS) met à disposition un premier canal de fréquence pour la transmission de données et pour la transmission d'informations de signalisation et un canal d'organisation selon la norme GSM,

- le premier poste de base (BS) met en outre à disposition un deuxième canal de fréquence pour la transmission de données par un procédé de transmission TD/CDMA,

- une liaison (V1) est établie dans le premier ou dans le deuxième canal de fréquence,

**caractérisé en ce que**

par l'intermédiaire du canal d'organisation, les normes soutenues dans la cellule radio sont signalées et **en ce que** par le contrôleur de poste de base (BSC) a lieu un transfert de la liaison (V1) à chaque fois sur l'autre canal de fréquence sans qu'un deuxième poste de base (BS) soit sélectionné.

2. Procédé selon l'une des revendications précédentes, dans lequel les bandes de fréquence du premier et du deuxième canal de fréquence se superposent.

3. Procédé selon l'une des revendications précédentes, dans lequel le premier et le deuxième canal de fréquence sont réalisés dans la même bande de fréquence mais dans différentes fenêtres temporelles.

4. Procédé selon la revendication 3, dans lequel le contrôleur de poste de base (BSC) commande une répartition de plusieurs liaisons (Vi) entre les fenêtres temporelles de telle sorte qu'une fenêtre temporelle pour un procédé de transmission TDMA resp. TD/CDMA est transférée à chaque fois à l'autre procédé de transmission.

5. Procédé selon la revendication 3, dans lequel le contrôleur de poste de base (BSC) commande une répartition de plusieurs liaisons (Vi) entre les fenêtres temporelles de telle sorte que le transfert de liaison (V1) vers l'autre procédé de transmission s'effectue dès que la charge d'une fenêtre temporelle descend en dessous d'une première valeur de seuil.

6. Procédé selon la revendication 3, dans lequel le contrôleur de poste de base (BSC) commande une répartition de plusieurs liaisons (Vi) ente les fenêtres temporelles de telle sorte que le transfert d'une liaison (Vs) vers l'autre procédé de transmission s'effectue dès que le rapport entre le poste mobile (MS) à capacité TD/CDMA et les autres postes mobiles (MS) à l'intérieur d'un environnement radio atteint une deuxième valeur de seuil.

7. Procédé selon l'une des revendications précédentes, dans lequel également des transferts de liaisons (Vi) depuis un deuxième poste de base (BS) sans capacité TD/CDMA s'effectuent de préférence vers le premier poste de base (BS).

8. Procédé selon l'une des revendications précédentes, dans lequel les informations de signalisation du premier canal de fréquence sont utilisées pour le transfert de liaisons (Vi) ou pour l'établissement d'une liaison.

9. Procédé selon l'une des revendications précédentes, dans lequel une demande d'un débit de données souhaité a lieu en vue d'un transfert d'une liaison (V1) ou pour l'établissement d'une liaison, le premier ou le deuxième canal de fréquence étant sélectionné ensuite.

10. Procédé selon l'une des revendications précédentes, dans lequel, pendant une liaison (V1) et au cas où des services supplémentaires sont utilisés, un transfert de la liaison (V1) sur le deuxième canal de fréquence a lieu.

11. Procédé selon l'une des revendications précédentes, dans lequel le premier et le deuxième canal de fréquence sont réalisés par différents dispositifs d'émission/réception (TRX1, TRX2) du premier poste de base (BS), mais d'autres modules (A, HF-S, HF-E) sont utilisés en commun.

12. Procédé selon l'une des revendications 1 à 10 précédentes, dans lequel le premier et le deuxième canal de fréquence sont réalisés dans un dispositif commun d'émission/réception (TRX3) du premier poste de base (BS).

13. Système de radiocommunication comprenant au moins un contrôleur de poste de base (BSC) et un poste de base (BS) associé à une cellule radio qui est configuré pour la transmission de données et pour la transmission d'informations de signalisation dans un premier canal de fréquence et avec un canal d'organisation selon la norme GSM,

- dont les postes de base (BS) contiennent au moins un dispositif d'émission/réception (TRX2, TRX3) pour un deuxième canal de fréquence par un procédé de transmission TD/CDMA,

- dont le contrôleur de poste de base (BSC) commande l'établissement d'une liaison (V1) dans le premier ou dans le deuxième canal de fréquence,

**caractérisé en ce que**

- le poste de base est configuré de telle sorte qu'il signale par l'intermédiaire du canal d'organisation la norme soutenue dans la cellule radio,

- **en ce qu'**un transfert de la liaison (V1) sur l'autre canal de fréquence est réalisé par le contrôleur de poste de base (BSC) sans qu'un deuxième poste de base (BS) soit sélectionné.

Fig 1

Fig 2

IN CAMEL

TD/CDMA

MS (TD/CDMA)

BTS (TD/CDMA)

AN ISDN

TD/CDMA

Funk-Kommu-nikations-system

MS (dual)

GSM

ST

AN GSM

Internet

TD/CDMA

AN B-ISDN

drahtloser
Teilnehmeranschluß

## Fig 3

f

TRX2

TD/CDMA

TRX1

GSM900 oder GSM1800 oder PCS1900

## Fig 4

f

TRX3

| GSM900 oder GSM1800 oder PCS1900 |
| GSM900 oder GSM1800 oder PCS1900 |
| GSM900 oder GSM1800 oder PCS1900 |
| GSM900 oder GSM1800 oder PCS1900 |
| GSM900 oder GSM1800 oder PCS1900 |
| GSM900 oder GSM1800 oder PCS1900 |
| GSM900 oder GSM1800 oder PCS1900 |
| GSM900 oder GSM1800 oder PCS1900 |

TD/CDMA

**Fig 5**

**Fig 6**

**Fig 7**

## Fig 8

GSM

BTS
(dual)

MS
(GSM)

## Fig 9

MS                          BTS                          BSC

Organisationskanal (GSM und/oder TD/CDMA verfügbar)

Anmelden (MTC, MOC)

Zuweisung von Frequenzband, Zeitschlitz und Übertragungsverfahren

Verbindungsaufbau

**Fig 10**

# Fig 11

## Fig 12

HF-S

tx → [ D/A ] → [ FS1 ] → [ MS1 ] → [ PA ] → tx

## Fig 13

HF-E

rx → [ FE1 ] → [ RPA ] → [ MS2 ] → [ FE2 ] → [ A/D ] → rx

# Fig 14

# Fig 15

TCH
SACCH
tx  FACCH

E1

| HF-Teil | → | Empfangs-filter | → | A/D-Wandler | → | digitaler Tiefpaß | 2:1 De-zimierer | e |

E2    E3    E4

E5    E6

| Mittam-belcode | | CDMA-codes |

E8    E9

| Kanal-schätzer | | b-Gene-rator | → | $A^{*T}A$ Generator | → | Cholesky-Zerleger |

em

E7

h → | Mittambel-interferenz. eliminierer | b

H, s

E10

e1/2 → | Matched Filter |

| Mittam-belcode |

E11

| Gleichungs-systemlöser 1 |

E12    z1/2

| Gleichungs-systemlöser 2 |

...

E13    E14    D1, D2

| Demodu-lator | → | Deinter-leaver | → | Kanalde-codierer | | Quellende-codierer | → | Daten-quelle |

D1, D2

| Demodu-lator | → | Deinter-leaver | → | Kanalde-codierer | | Quellende-codierer | → | Daten-quelle |

$e_{E13}^{(k)}$